(19) Europäisches Patentamt
European Patent Office
Office européen des brevets

(11) **EP 3 386 360 B1**

(12) **FASCICULE DE BREVET EUROPEEN**

(45) Date de publication et mention de la délivrance du brevet:
**28.12.2022 Bulletin 2022/52**

(21) Numéro de dépôt: **16819999.0**

(22) Date de dépôt: **08.12.2016**

(51) Classification Internationale des Brevets (IPC):
***A47J 43/046*** *(2006.01)*

(52) Classification Coopérative des Brevets (CPC):
**A47J 43/046**

(86) Numéro de dépôt international:
**PCT/FR2016/053283**

(87) Numéro de publication internationale:
**WO 2017/098169 (15.06.2017 Gazette 2017/24)**

(54) **DISPOSITIF DE PREPARATION CULINAIRE**

LEBENSMITTELZUBEREITUNGSVORRICHTUNG

FOOD PREPARATION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2015 FR 1562124**

(43) Date de publication de la demande:
**17.10.2018 Bulletin 2018/42**

(73) Titulaire: **ADIAMAS**
**FR-63550 Palladuc (FR)**

(72) Inventeurs:
• **HERAULT, Erwan**
**01000 Bourg-en-Bresse (FR)**
• **RONZE, Fabien**
**63350 Bulhon (FR)**
• **JANVIER, Patrick**
**63190 Lezoux (FR)**
• **MONDIERE, Julien**
**63300 Escoutoux (FR)**

(74) Mandataire: **Jacobacci Coralis Harle**
**32, rue de l'Arcade**
**75008 Paris (FR)**

(56) Documents cités:
**EP-A1- 0 216 836**       **EP-B1- 0 216 836**
**WO-A2-2006/084055**   **US-A1- 2005 018 534**
**US-A1- 2015 342 408**

1      **EP 3 386 360 B1**      2

## Description

DOMAINE TECHNIQUE AUQUEL SE RAPPORTE L'INVENTION

La présente invention concerne de manière générale le domaine des dispositifs de préparation culinaire.

Elle concerne plus particulièrement un dispositif de préparation culinaire selon le préambule de la revendication 1.

Elle concerne en particulier les petits appareils électroménagers, tels que ceux usuellement appelés « blender », « mixers », « hachoirs » ou encore « minihachoir », utilisés pour travailler ou transformer des préparations culinaires, à savoir par exemple pour mélanger, mixer, hacher ou encore réduire en purée ou en liquide des aliments.

ARRIERE-PLAN TECHNOLOGIQUE

Il existe actuellement sur le marché de nombreux dispositifs de préparation culinaire du type précité dans lesquels il est prévu une lame disposée à proximité du fond du contenant. Ce contenant est disposé sur un socle qui enferme un moteur entraînant en rotation la lame autour d'un axe de rotation vertical en vu du travail des aliments.

Certains de ces dispositifs sont destinés à la transformation des aliments, par exemple à leur broyage, hachage, ou liquéfaction, pour obtenir des smoothies, des milk-shakes, des soupes ou encore de la glace pilée.

En vue de ces différentes transformations, les constructeurs ont augmenté le nombre de lames prévues dans les contenants, et ils ont adapté leur forme respective ainsi que leur agencement sur l'axe de rotation vertical.

Cependant, le fonctionnement de ces dispositifs de préparation culinaire engendre de nombreux rebuts, c'est-à-dire des aliments non travaillés.

En effet, après un cycle complet de fonctionnement qui comprend la mise en rotation de chacune des lames, la transformation des aliments pendant un temps donné à une ou plusieurs vitesses choisies, et l'arrêt des lames, il subsiste des aliments non travaillés au fond des contenants.

Il en résulte une préparation inhomogène des aliments travaillés.

Afin d'obtenir une préparation homogène à partir de ces dispositifs de préparation culinaire, il est par conséquent nécessaire de réitérer les cycles de fonctionnement, ce qui est, en pratique, peu efficace et consommateur d'énergie.

On connaît par ailleurs du document US20050018534, un dispositif de préparation culinaire dans lequel il est prévu plusieurs lames entraînées en rotation autour d'axes de rotation distincts. Ces axes de rotation sont soit tous inclinés par rapport à l'axe vertical et dirigé vers la paroi du contenant, soit tous orientés selon la direction de l'axe vertical.

Cet agencement de lames améliore le travail des aliments sans pour autant que le brassage des aliments soit entièrement satisfaisant.

OBJET DE L'INVENTION

Afin de remédier aux inconvénients précités de l'état de la technique, la présente invention propose un dispositif de préparation culinaire selon la revendication 1.

Ainsi, avantageusement, l'agencement des lames du dispositif selon l'invention permet de rompre le mouvement globalement circulaire du flux de matière autour de l'axe vertical du contenant, ce qui facilite la circulation des aliments dans ledit contenant ; ces aliments sont alors travaillés de façon plus homogène pendant un temps plus court de fonctionnement.

Autrement dit, associer une lame dont l'axe de rotation est vertical à une lame dont l'axe de rotation est incliné permet d'améliorer le brassage des aliments dans le contenant.

En outre, dans le dispositif selon l'invention, les aliments sont susceptibles de rencontrer plusieurs fois chaque lame, ce qui réduit avantageusement la quantité de rebuts engendrés lors du fonctionnement dudit dispositif de préparation culinaire.

D'autres caractéristiques non limitatives et avantageuses du dispositif de préparation culinaire conforme à l'invention sont données dans les revendications 2 à 15.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique de principe d'un premier mode de réalisation d'un dispositif de préparation culinaire selon l'invention ;
- la figure 2 est une vue schématique de principe d'un deuxième mode de réalisation d'un dispositif de préparation culinaire selon l'invention ;

- la figure 3 est une vue schématique partielle en perspective d'un troisième mode de réalisation d'un dispositif de préparation culinaire selon l'invention ;
- la figure 4 est une vue schématique partielle en perspective d'un quatrième mode de réalisation d'un dispositif de préparation culinaire selon l'invention ; et,
- la figure 5 est une représentation schématique d'un premier mode d'entraînement en rotation possible des lames dans le contenant.

2

En préliminaire, on notera que les éléments identiques ou similaires des différents modes de réalisation représentés seront, dans la mesure du possible, référencés par les mêmes signes de référence et ne seront pas décrits à chaque fois.

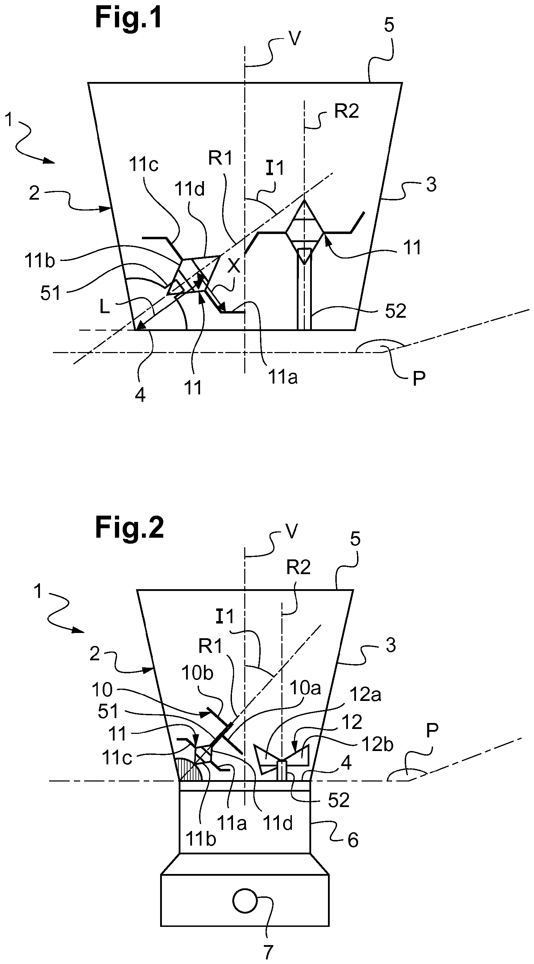

Sur les figures 1 à 4, on a représenté différents modes de réalisation d'un dispositif de préparation culinaire 1 destiné à travailler des aliments, c'est-à-dire à les mélanger, à les transformer en poudre, en purée ou en liquide, ou encore à les couper ou les broyer.

Quel que soit le mode de réalisation envisagé, le dispositif de préparation culinaire 1 comprend un contenant 2 adapté à recevoir les aliments à préparer, et au moins deux lames 10, 11, 12, 13 disposées dans ce contenant 2 et adaptées à travailler les aliments introduits dans ledit contenant 2.

On entend par « lame » une pièce en matière dure, en métal ou en matière plastique par exemple, relativement plate et mince, de forme plutôt allongée et globalement étroite. Ainsi, au sens où on l'entend ici, une lame peut être une pale de brassage et n'est pas nécessairement un objet coupant, tranchant, ni affûté.

Dans la suite de la description, on considérera qu'un bord de coupe est affûté lorsqu'il a été affiné suffisamment pour être tranchant. Un tel affûtage peut être réalisé par exemple à la meule ou par toute technique connue de l'homme du métier.

Ici, les lames 10, 11, 12, 13 sont réalisées en une matière compatible avec le travail des aliments propres à être consommés par des êtres humains.

De façon classique, le contenant 2 est également réalisé en une matière compatible avec le travail des aliments propres à être consommés par des êtres humains. Il est de plus lavable et relativement rigide.

Ici, la matière utilisée pour réaliser le contenant 2 est une matière polymère plastique avantageusement transparente.

En variante, le contenant 2 pourrait être en verre, ou en plastique opaque.

Le contenant 2 présente un fond 4 à partir duquel s'élève une paroi latérale 3 qui débouche sur une ouverture 5 du dispositif de préparation culinaire 1.

L'ouverture 5 permet d'introduire les aliments dans le contenant 2, et de les extraire dudit contenant 2 une fois travaillés.

Sur les dessins représentés, le fond 4 est plan. Le plan défini par ce fond 4 est repéré par la référence P sur les figures 1 à 4).

En variante, il pourrait présenter une concavité globalement tournée vers l'ouverture.

La paroi latérale 3 s'élève à partir du fond 4 globalement selon un axe vertical V. L'axe vertical V est perpendiculaire au fond 4 lorsque celui-ci est plan. L'axe vertical V passe par le centre du fond 4 lorsque celui-ci est concave et il est alors perpendiculaire au plan tangent au fond 4 en ce point central.

Plus précisément, dans les premier, deuxième et troisième modes de réalisation du dispositif de préparation culinaire 1 représentés respectivement sur les figures 1, à 3, le fond 4 est une surface plane, de forme circulaire ou elliptique, et la paroi latérale 3 s'élève légèrement à l'oblique par rapport à l'axe vertical V associé à ce fond 4, de sorte que le contenant 2 présente une forme évasée, la surface du fond 4 étant plus petite que la surface de l'ouverture 5 du dispositif de préparation culinaire 1.

Avantageusement, la forme évasée du contenant 2 favorise la circulation des aliments dans ce contenant 2 lors du fonctionnement du dispositif de préparation culinaire 1.

En outre, cette forme évasée facilite l'introduction des aliments dans le contenant 2, ainsi que leur extraction.

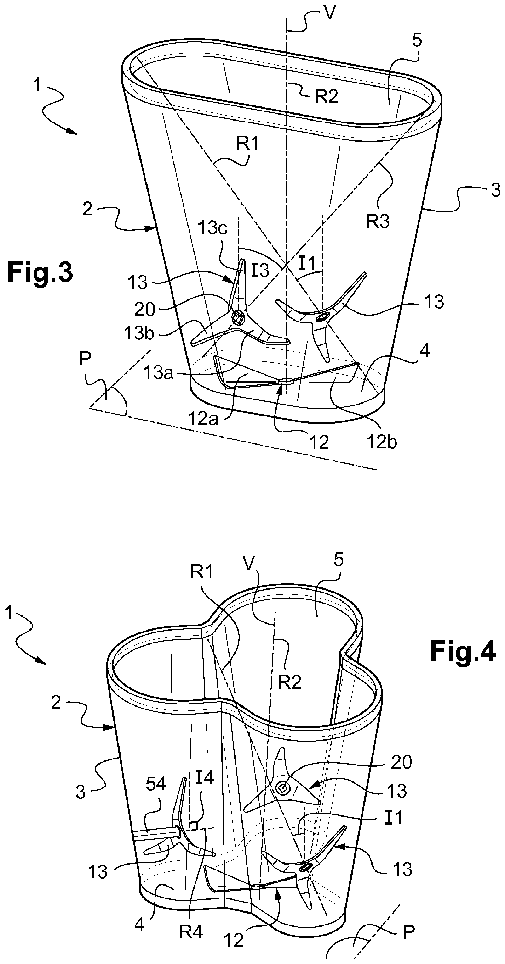

En variante, comme c'est le cas dans le quatrième mode de réalisation représenté sur la figure 4, le fond 4 peut être une surface plus complexe et, la paroi latérale 3 est alors elle-même complexe car elle suit le contour de la surface tout en s'élevant légèrement à l'oblique par rapport à l'axe vertical V du contenant 2.

De façon classique, quel que soit le mode de réalisation envisagé, la paroi latérale 3 s'élève verticalement sur quelques dizaines de centimètres.

Le contenant 2 est disposé sur un socle 6 (voir figure 2) enfermant au moins un moteur adapté à mettre en rotation les lames 10, 11, 12, 13 autour d'un axe de rotation R1, R2, R3, R4.

Le moteur présente ici une puissance comprise entre 200 Watts (W) et 2000 W. Il est commandé par un utilisateur au moyen d'une interface 7 directement accessible sur une face externe du socle 6 (voir figure 2).

Chaque lame 10, 11, 12, 13 est montée sur un arbre d'entraînement 51, 52, 53, 54 prévu dans le fond 4 du contenant 2 et adapté à mettre en rotation ladite lame 10, 11, 12, 13.

De façon classique en soit, chaque lame est donc pourvue, généralement dans une région centrale, d'un palier 20 de montage sur l'arbre d'entraînement 51, 52, 53, 54 (voir en particulier figures 3 et 4) à partir duquel s'étendent plusieurs ailes 10a, 10b ; 11a, 11b, 11c, 11d ; 12a, 12b ; 13a, 13b, 13c de lames 10, 11, 12, 13 (voir figures 1 et 3).

Ainsi, la lame 10, 11, 12, 13 est montée dans le contenant 2 par engagement de son palier 20 central sur l'arbre d'entraînement 51, 52, 53, 54.

Avantageusement, chaque arbre d'entraînement 51, 52, 53, 54 peut recevoir une ou plusieurs lames 10, 11, 12, 13.

Dans les exemples présentés ici, les lames 10, 11, 12, 13 sont montées de façon solidaires avec l'arbre d'entraînement 51, 52, 53, 54 les portant, c'est-à-dire d'une seule pièce avec ledit arbre d'entraînement 51, 52, 53, 54.

Selon une variante non représentée, on pourrait envisager que les lames soient montées de façon amovible sur les arbres d'entraînement, c'est-à-dire de sorte qu'elles puissent être placées et retirées des arbres d'entraînement selon les besoins.

Ainsi, selon cette variante avantageuse, les lames seraient plus facilement lavables.

En outre, toujours selon cette variante, chaque lame pourrait être verrouillée sur l'arbre d'entraînement correspondant, de sorte qu'elle ne puisse pas s'échapper de cet arbre d'entraînement lorsque le dispositif de préparation culinaire fonctionne, c'est-à-dire lorsqu'elles sont entraînées en rotation.

Chaque arbre d'entraînement 51, 52, 53, 54 présente un axe principal qui coïncide avec l'axe de rotation R1, R2, R3, R4 de la lame 10, 11, 12, 13 qu'il supporte.

L'axe de rotation R2 d'au moins une des lames 10, 11, 12, 13 disposées dans le contenant 2 s'étend selon la direction de l'axe vertical V.

De manière remarquable, l'axe de rotation R1, R3, R4, d'au moins une des autres lames 10, 11, 12, 13 disposées dans le contenant 2 est incliné d'un angle d'inclinaison I1, I3, I4 non nul par rapport audit axe vertical V du contenant 2.

Autrement dit, l'axe principal d'au moins un arbre d'entraînement 52 des lames 10, 11, 12, 13 est parallèle avec l'axe vertical V du contenant 2, sans être nécessairement confondu avec cet axe vertical V, et l'axe principal d'au moins un des autres arbres d'entraînement 51, 53, 54 des lames 10, 11, 12, 13 est sécant avec l'axe vertical V du contenant 2, sans être confondu avec ledit axe vertical V.

Prévoir une configuration dans laquelle un axe de rotation est vertical et un axe de rotation est incliné permet d'augmenter le brassage des aliments dans le contenant et d'améliorer le flux de matière dans ledit contenant.

On entend ici par « angle d'inclinaison », l'angle le plus petit qui s'étend entre ledit axe vertical V du contenant 2 et l'axe de rotation R1, R3, R4, de la lame 10, 11, 12, 13 correspondante.

Plus précisément, ici, chaque angle d'inclinaison I1, I3, I4 est aigu ou droit.

De manière avantageuse, la valeur de l'angle d'inclinaison I1, I3, I4 associé à l'axe de rotation R1, R3, R4 incliné de chaque lame 10, 11, 12, 13 est comprise entre 5 et 90 degrés.

La valeur de l'angle d'inclinaison I1, I3, I4 d'au moins une des lames peut notamment être comprise entre 40° et 90°.

Par exemple, prévoir une lame dont l'axe de rotation est vertical et une lame dont l'axe de rotation est incliné à 90° permet d'améliorer tout particulièrement le brassage des aliments dans le contenant.

Prévoir une lame dont l'axe de rotation est vertical et une lame dont l'axe de rotation est incliné à 45° permet aussi d'améliorer le brassage des aliments et le flux de matière dans le contenant, ce qui réduit les rebuts lors de l'utilisation du dispositif de préparation culinaire.

Avantageusement, l'inclinaison d'au moins une des lames 10, 11, 12, 13 du dispositif de préparation culinaire 1 selon l'invention est telle qu'elle permet de rompre le mouvement globalement circulaire du flux des aliments créé autour de l'axe vertical V du contenant 2 (ou d'un axe de rotation s'étendant selon la direction de l'axe vertical V). Cette configuration facilite la circulation des aliments dans ledit contenant 2, ces aliments étant ainsi travaillés de façon plus homogène.

Autrement dit, l'association d'une lame verticale et d'une lame inclinée améliore la circulation des aliments dans l'ensemble dudit contenant 2, ce qui favorise le travail homogène des aliments et permet de diminuer le temps d'un cycle de fonctionnement du dispositif de préparation culinaire 1.

Par ailleurs, les axes de rotation inclinés le sont préférentiellement en direction centre du contenant (voir figures 1 à 5).

Les lames 10, 11, 12, 13 sont ainsi tournées vers le volume principal du contenant 2 plutôt que vers la paroi latérale 3 dont elles sont le plus proche. Cela favorise le brassage de l'ensemble des aliments contenus dans le contenant 2.

La forme des lames 10, 11, 12, 13 est compatible avec leur angle d'inclinaison et/ou leur verticalité, de sorte que lorsque les lames sont entraînées en rotation sur leur axe de rotation R1, R2, R3, R4 lesdites lames 10, 11, 12, 13 ne butent ni contre le fond 4 ni contre la paroi latérale 3 du contenant 2.

Autrement dit, la longueur des ailes 10a, 10b ; 11a, 11b, 11c, 11d ; 12a, 12b ; 13a, 13b, 13c de chaque lame 10, 11, 12, 13 et la distance, par rapport au fond 4, à laquelle chaque lame 10, 11, 12, 13 est montée sur son arbre d'entraînement 51, 52, 53, 54 sont compatibles avec la valeur de l'angle d'inclinaison I1, I3, I4 pour que lesdites lames 10, 11, 12, 13 puissent tourner dans le contenant 2 sans entrer en contact avec la paroi latérale 3, le fond 4, ou les autres lames 10, 11, 12, 13.

En pratique, les lames 10 utilisées présentent par exemple des ailes 10a, 10b suffisamment courtes pour ne pas buter contre la paroi latérale 3 du contenant 2.

Les lames 11, 13 présentent quant à elles des ailes 11a, 11b, 11c, 11d ; 13a, 13b, 13c dont l'extrémité libre est recourbée (voir figures 1 et 3).

En particulier, si on envisage une situation telle que celle représentée sur la figure 1, dans laquelle l'extrémité libre de l'aile 11a de la lame 11 est recourbée et la valeur de l'angle d'inclinaison I1 de l'axe de rotation R1 est telle que cette extrémité est parallèle au fond 4 plan du contenant 2, il est possible d'établir la longueur maximale X de la portion d'aile non recourbée en fonction de la valeur dudit angle d'inclinaison I1, et de la distance L à laquelle la lame 11 est montée sur l'arbre d'entraînement 51. Cette longueur maximale X s'estime selon la relation mathématique suivante :

$$X = L / \tan(I1).$$

Par ailleurs, les lames 10, 11, 12, 13 sont disposées à proximité du fond 4 du contenant 2, c'est-à-dire entre le fond 4 du contenant 2 et la moitié de la hauteur totale dudit contenant 2. On considérera que la « hauteur totale » du contenant 2 est la dimension hors-tout du contenant 2 mesurée selon l'axe vertical V.

De façon préférentielle, les lames 10, 11, 12, 13 sont disposées entre le fond 4 du contenant 2 et le tiers de la hauteur totale du contenant 2, en partant dudit fond 4 du contenant 2.

On pourrait cependant aussi prévoir que les lames soient situées à n'importe quelle hauteur dans le contenant.

Dans tous les cas, pour des raisons pratiques, les lames sont situées à une distance supérieure ou égale à 5 millimètres du fond 4 du contenant 2.

Par ailleurs, disposer au moins certaines des lames prévues dans le contenant à des hauteurs différentes les unes des autres permet d'augmenter encore le brassage des aliments et donc d'atteindre un résultat de coupe, de mixage et/ou de brassage plus homogène.

Grâce à l'agencement particulier des lames 10, 11, 12, 13 dans le dispositif de préparation culinaire 1, résultant à la fois de leur inclinaison, de leur position et de leur hauteur dans le contenant 2, les aliments sont susceptibles de rencontrer plusieurs fois chaque lame 10, 11, 12, 13, ce qui réduit avantageusement la quantité de rebuts engendrés lors du fonctionnement dudit dispositif de préparation culinaire 1.

D'autre part, il est possible de prévoir une lame supplémentaire libre dans ledit contenant 2. Cette lame supplémentaire libre est montée sur un arbre, mais, contrairement aux autres lames, elle n'est pas entraînée en rotation sur cet arbre. En revanche, c'est une lame dite « folle » car elle est libre de tourner autour de son axe de rotation, sous l'effet du flux de matière créé à l'intérieur du contenant lors de l'utilisation du dispositif de préparation culinaire.

Comme pour les autres lames, l'axe de rotation associé à cette lame supplémentaire peut soit s'étendre selon la direction de l'axe vertical, soit être incliné par rapport audit axe vertical.

Deux types de montage de la lame supplémentaire dans le contenant sont envisageables.

Selon le premier type de montage, l'arbre de montage de la lame supplémentaire est fixe dans le contenant, et la lame supplémentaire est montée sur cet arbre de manière à pouvoir tourner librement autour de lui lorsqu'elle est entraînée en rotation par le flux de matière circulant dans le contenant.

Selon le deuxième type de montage, la lame supplémentaire est montée solidairement sur son arbre de montage, de sorte que ladite lame supplémentaire et ledit arbre de montage sont fixes l'un par rapport à l'autre, mais l'ensemble formé par ladite lame supplémentaire et ledit arbre de montage est libre de tourner autour de l'axe de rotation lorsque la lame est entraînée par le flux de matière circulant dans le contenant.

Avantageusement, ajouter une telle lame libre en sus des deux lames au minimum prévues dans le contenant 2 permet de perturber davantage le flux de matière et d'augmenter le brassage des aliments à l'intérieur dudit contenant.

Cette lame supplémentaire libre est de préférence une pale de brassage 12, mais il peut s'agir de n'importe quel autre type de lame.

Selon une caractéristique avantageuse, il est également possible de prévoir un mécanisme de blocage de ladite lame supplémentaire libre dans ledit contenant. Autrement dit, on peut prévoir de bloquer la libre rotation de cette lame supplémentaire de sorte qu'elle soit fixe dans le contenant malgré le flux de matière créé dans ledit contenant.

Cette lame supplémentaire fixe perturbe le flux de matière, ce qui augmente le brassage des aliments.

Le mécanisme de blocage de la lame supplémentaire peut être activé ou désactivé via l'interface 7 du dispositif de préparation culinaire 1.

Notamment, lorsque la lame supplémentaire est montée dans le contenant selon le deuxième type de montage, il est envisageable que le mécanisme de blocage puisse agir sur l'arbre de montage de ladite lame supplémentaire. On peut par exemple envisager que l'arbre soit terminé par un engrenage disposé dans le socle 6 du dispositif de préparation culinaire 1. Cet engrenage, formant le mécanisme de blocage, peut adopter une position dans laquelle il fait prise avec un élément du socle de manière à empêcher la rotation de l'arbre de montage, et une autre position, dans laquelle il est libre de sorte que l'arbre de montage peut être mis en rotation par le flux de matière agissant sur la lame supplémentaire.

Selon une autre caractéristique de l'invention, il est possible de prévoir un élément déflecteur dans le contenant du dispositif de préparation culinaire.

Un tel élément déflecteur est par exemple disposé dans le fond du contenant, entre les différents arbres de rotation des lames.

Il peut aussi être disposé sur la paroi du contenant, dans une région du contenant située au-dessus de la région de rotation des lames.

Il s'agit un élément fixe adapté à perturber le flux des aliments, sur le même principe que la lame supplémentaire dont la libre rotation est bloquée.

Il peut par exemple s'agir d'un élément en acier inoxydable ayant la forme d'une lame telle que celle décrite ci-après, avec ou sans bord de coupe affûté.

Grâce à un tel élément déflecteur, le brassage des aliments est augmenté, ce qui permet d'abaisser le temps d'un cycle de fonctionnement complet du dispositif de préparation culinaire selon l'invention.

Dans la suite de la description, différents modes de réalisation de l'invention sont présentés plus en détails.

Dans le premier mode de réalisation du dispositif de préparation culinaire 1 représenté sur la figure 1, le fond 4 accueille un premier et un deuxième arbre d'entraînement 51, 52, supportant chacun une lame de mixeur 11.

Cette lame de mixeur 11 est connue de l'homme du métier. Elle peut présenter certains bords de coupe affûtés. Il s'agit par exemple d'une lame appelée dans le langage courant « couteau Blender ».

Elle comprend plus précisément quatre ailes 11a, 11b, 11c, 11d non planes ayant chacune un bord de coupe affûté. Ces ailes 11a, 11b, 11c, 11d, sont symétriques deux à deux.

Sa forme particulière la rend adaptée à réduire en purée les aliments relativement mous et à réduire en petit morceaux les aliments plus durs. Par exemple, elle est adaptée à la réalisation de la glace pillée. Elle est ici réalisée en acier inoxydable.

Comme on peut le voir sur la figure 1, une des lames de mixeur 11 est entraînée en rotation autour d'un premier axe de rotation R1 incliné d'un angle d'inclinaison I1 dont la valeur est ici choisie égale à 50°.

L'autre lame de mixeur 11 est entraînée en rotation autour d'un deuxième axe de rotation R2 qui s'étend selon la direction de l'axe vertical V et qui est décentré dans le fond 4 du contenant 2, de sorte que ledit deuxième axe de rotation R2 n'est pas confondu avec l'axe vertical V.

En outre, dans ce premier mode de réalisation, les deux lames de mixeur 11 ne sont pas situées à la même hauteur par rapport au fond 4 du contenant 2 : la lame de mixeur 11 en rotation autour du premier axe de rotation R1 est située entre le fond 4 du contenant 2 et le tiers de la hauteur totale dudit contenant 2, tandis que l'autre lame de mixeur 11 est située entre le tiers et la moitié de la hauteur totale dudit contenant 2, en partant du fond 4.

Dans le deuxième mode de réalisation du dispositif de préparation culinaire 1 représenté sur la figure 2, le fond 4 du contenant 2 accueille, comme dans le premier mode de réalisation, un premier et un deuxième arbre d'entraînement 51, 52. Deux lames 10, 11 distinctes et différentes sont montées sur le premier arbre d'entraînement 51, et une autre lame 12 est montée sur le deuxième arbre d'entraînement 52.

Les deux lames 10, 11 montées sur le même premier arbre d'entraînement 51 sont mises en rotation autour d'un premier axe de rotation R1 commun, incliné d'un angle d'inclinaison I1 dont la valeur est égale à 45°, par rapport à l'axe vertical V du contenant 2.

En pratique, ces deux lames 10, 11 sont séparées l'une de l'autre d'une distance comprise entre 5 millimètres et 50 millimètres, par exemple égale à 10 millimètres le long dudit axe de rotation commun.

La lame 12 est mise en rotation autour d'un deuxième axe de rotation R2 s'étendant selon la direction de l'axe vertical V, sans être ici confondu avec cet axe vertical V.

Ici, la lame 10 utilisée est plus communément appelée lame de hachoir 10. Elle est connue de l'homme du métier et ne sera décrite que brièvement. Elle présente un bord de coupe affûté de sorte qu'elle est particulièrement adaptée au découpage et au hachage des aliments. La matière utilisée pour réaliser une telle lame de hachoir est donc compatible avec un éventuel affûtage de cette lame. Il s'agit par exemple d'acier inoxydable.

La lame 11 utilisée est la lame de mixeur 11 décrite précédemment.

La lame 12 utilisée ici est plus communément appelée pale de brassage 12. Une telle pale de brassage 12 est connue de l'homme du métier. Avantageusement, grâce à sa forme, elle est adaptée à mettre en mouvement les aliments pour qu'ils soient travaillés de manière homogène par les autres lames du contenant.

Ici, elle comprend deux ailes 12a, 12b non planes. Chaque aile 12a, 12b est recourbée longitudinalement, de sorte que les bords libres de chaque aile 12a, 12b ne sont pas situés dans le même plan.

La lame 12 est ici réalisée en matière plastique rigide. En variante, on pourrait la réaliser en acier inoxydable.

On pourrait aussi prévoir de monter une ou des lames additionnelles sur le premier et/ou le deuxième arbre d'entraînement en variante de ce deuxième mode de réalisation.

Dans le troisième mode de réalisation du dispositif de préparation culinaire 1 représenté sur la figure 3, le fond 4 accueille trois arbres d'entraînement (non représentés) supportant chacun une seule lame : soit un autre type de lame de mixeur 13, soit une pale de brassage 12.

Les lames de mixeur 13 diffèrent des lames de mixeur 11 en ce qu'elles comprennent non pas quatre, mais trois ailes 13a, 13b, et 13c non planes.

L'extrémité libre de chacune des trois ailes 13a, 13b, et 13c est recourbée, et chaque aile 13a, 13b, 13c présente un bord de coupe affûté.

Les lames de mixeur 13 sont ici réalisées en acier inoxydable. La lame de mixeur 13 peut aussi être appelée « couteau Blender » dans le langage courant.

Le troisième mode de réalisation diffère des deux premier modes de réalisation en ce qu'il comprend le troisième arbre d'entraînement 53 pour entraîner en rotation une lame 13 autour d'un troisième axe de rotation R3.

Ainsi, dans le troisième mode de réalisation, les lames de mixeur 13 sont mises en rotation respectivement autour du premier axe de rotation R1 et du troisième axe de rotation R3, lesdits premier et troisième axes de rotation R1, R3 étant inclinés respectivement du premier angle d'inclinaison I1 et d'un troisième angle d'inclinaison I3, valant chacun 35°.

La pale de brassage 12 est mise en rotation autour du deuxième axe de rotation R2 parallèle à l'axe vertical V du contenant 2.

Plus précisément, dans ce troisième mode de réalisation, le deuxième axe de rotation R2 de la lame 12 s'étend selon la direction de l'axe vertical V et est confondu avec lui.

Cette pale de brassage 12 est située à proximité directe du fond 4 du contenant 2, c'est-à-dire aussi proche du fond 4 que possible, par exemple à 5 millimètres du fond 4 du contenant 2. En outre, elle est positionnée globalement au centre du fond 4 du contenant 2, c'est-à-dire à distance de la paroi latérale 3.

Avantageusement, cette position de la pale de brassage 12 la rend adaptée à mettre en mouvement les aliments ayant tendance à se déposer dans le fond 4 du contenant 2.

En outre, avantageusement, le deuxième axe de rotation R2 vertical de la pale de brassage 12 est adapté à faire remonter les aliments depuis le fond 4 vers l'ouverture 5 du contenant 2, de manière à diriger les aliments vers les lames de mixeur 13 contenues dans le contenant 2.

En variante de ce troisième mode de réalisation, on peut envisager qu'une des lames de mixeur soit libre en rotation sur son arbre de montage, au lieu d'y être entraînée en rotation. Ainsi, c'est le flux des aliments, créé par l'entraînement en rotation des autres lames 12, 13, qui permet de faire tourner la lame libre.

Bien entendu, en variante, on pourrait envisager que la lame libre soit positionnée sur un arbre vertical, de sorte que le flux des aliments la mette en rotation autour d'un axe de rotation s'étendant selon la direction de l'axe vertical.

Le quatrième mode de réalisation représenté sur la figure 4 est similaire au troisième mode de réalisation, si ce n'est que l'angle d'inclinaison I1 de l'axe de rotation R1 d'une des deux lames de mixeur 13 vaut 40° au lieu de 35°, et qu'une lame de mixeur 13 additionnelle est placée sur un quatrième arbre d'entraînement 54 adapté à entraîner en rotation ladite lame de mixeur 13 autour d'un quatrième axe de rotation R4 incliné d'un angle inclinaison I4 valant 90°.

En pratique, le mécanisme (non représenté) permettant d'entraîner en rotation la lame de mixeur 13 additionnelle autour du quatrième axe de rotation R4, perpendiculairement à l'axe vertical V, court le long de la paroi 3 du contenant 2, à l'extérieur de celui-ci.

En variante, la lame de mixeur 13 additionnelle pourrait être montée libre en rotation sur son arbre de montage, de manière à pouvoir tourner librement autour du quatrième axe de rotation R4, sous l'effet du flux de matière créé dans le dispositif de préparation culinaire 1 en fonctionnement.

Bien entendu, certains des modes de réalisation présentés sont compatibles entre eux, et on pourrait prévoir de les combiner.

Il est également envisageable d'intervertir les différentes lames décrites, et/ou d'utiliser toute autre lame connue de l'homme du métier dans le dispositif de préparation culinaire selon l'invention.

Dans la partie qui suit, on a détaillé un premier et un deuxième mode d'entraînement en rotation des lames 10, 11, 12, 13.

Quel que soit le mode d'entraînement décrit, les lames 10, 11, 12, 13 étant solidaires des arbres d'entraînement 51, 52, 53, 54 lorsque le dispositif de préparation culinaire 1 est en fonctionnement, on considérera que le sens de rotation et la vitesse de rotation de chaque lame 10, 11, 12, 13 sont imposés par le sens de rotation et la vitesse de rotation de l'arbre d'entraînement 51, 52, 53, 54 sur lequel elle est montée.

Selon le premier mode d'entraînement en rotation des lames, les lames sont montées sur des arbres d'entraînement 51, 52, 53, 54 entraînés en rotation par un même arbre moteur 40 principal.

Avantageusement, ce premier mode d'entraînement en rotation des lames ne nécessite qu'un seul moteur et est facile à mettre en œuvre.

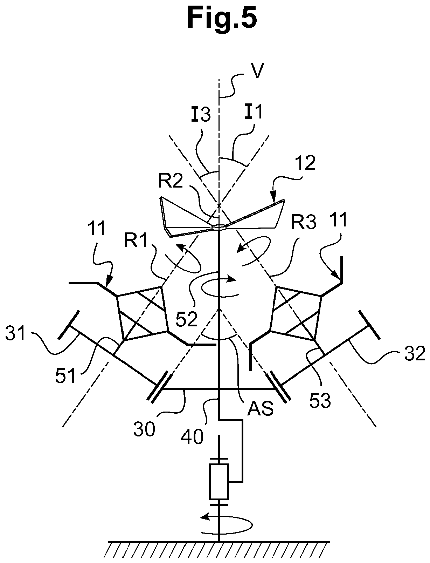

On a représenté sur la figure 5 le premier mode d'entraînement en rotation possible des lames dans un dispositif selon l'invention.

Le dispositif de préparation culinaire 1 de la figure 5 est similaire à celui représenté sur la figure 3 : il comprend deux lames de mixeur 11 et une pale de brassage 12, entraînées en rotation sur des premier, deuxième et troisième arbres d'entraînement 51, 52, 53 distincts.

Les premier et troisième arbres d'entraînement 51, 53 sont inclinés par rapport à l'axe vertical V de sorte que les premier et troisième angles d'inclinaison I1, I3 des premier et troisième axes de rotation R1, R3 des lames de mixeur 11 présentent des valeurs identiques, et les lames de mixeur 11 sont placées à la même hauteur dans le contenant 2.

Le deuxième arbre d'entraînement 52 est vertical, de sorte que le deuxième axe de rotation R2 de la pale de brassage 12 s'étend selon la direction de l'axe vertical.

Sur cette figure 5, les premier, deuxième et troisième arbres d'entraînement 51, 52, 53 des lames 11, 12 sont reliés à l'arbre moteur 40 du moteur.

A cet effet, l'arbre moteur 40 est terminé par un engrenage conique 30. Cet engrenage conique 30 est prolongé, de l'autre côté, par le deuxième arbre d'entraînement 52. L'engrenage conique 30 est emboîté, d'une part, sur un premier engrenage droit 31 terminant le premier arbre d'entraînement 51 et, d'autre part, sur un deuxième engrenage droit 32 terminant le troisième arbre d'entraînement 53.

On entend ici par « engrenage droit » un engrenage dont l'enveloppe est cylindrique, sans tenir compte de la forme des dents. Similairement, un « engrenage conique » est un engrenage dont l'enveloppe est celle d'un cône tronqué, quelle que soit la forme des dents.

Comme le montre la figure 5, les engrenages sont ici des engrenages pleins présentant une unique enveloppe extérieure accueillant les dents desdits engrenages.

En variante, on pourrait envisager des engrenages en couronne présentant à la fois une enveloppe intérieure et une enveloppe extérieure, et dont les dents seraient situées sur l'enveloppe intérieure et/ou sur l'enveloppe extérieure.

De tels engrenages, en couronne ou plein, sont connus de l'homme du métier, notamment leurs répercussions sur leur sens de rotation respectif, et ne seront pas détaillés plus avant.

Dans l'exemple représenté sur la figure 5, les dents des premier et deuxième engrenages droits 31, 32 sont directement emboîtées avec les dents de l'engrenage conique 30 de l'arbre moteur 40. Les premier et troisième arbres d'entraînement 51, 53 présentent alors le même sens de rotation, opposé à celui de l'arbre moteur 40 et de l'engrenage conique 30.

Ainsi, le sens de rotation des lames de mixeur 11 est opposé à celui de la pale de brassage 12 porté par le deuxième arbre d'entraînement 52 vertical.

Par ailleurs, dans l'exemple de la figure 5, les premier et deuxième engrenages droits 31, 32 présentent le même rayon de sorte que les deux lames de mixeur 11 sont entraînées à la même vitesse de rotation.

De plus, ici, les premier et troisième angles d'inclinaison I1, I3 des premier et troisième axes de rotation R1, R3 des lames de mixeur 11 sont égaux, et valent chacun la moitié de l'angle au sommet AS de l'engrenage conique 30.

On considère que l'angle au sommet AS est l'angle formé en prolongeant deux droites directrices de l'enveloppe de l'engrenage conique 30, en vis-à-vis l'une de l'autre par rapport à l'arbre moteur 40 associé à cet engrenage conique 30.

Mathématiquement, on peut écrire ici que :

$$AS = I1 + I3,$$

et

$$I1 = I3 = AS/2.$$

En variante, on pourrait prévoir de choisir des rayons différents et un nombre de dents différent pour les premier et deuxième engrenages, de manière à modifier la vitesse de rotation associée à chacun des premier et troisième arbres d'entraînement.

Par ailleurs, d'une manière générale, les angles d'inclinaison des axes de rotation des lames découlent directement de l'assemblage des différents engrenages, coniques ou droits, entre eux. Ainsi, on pourrait prévoir que l'engrenage terminant l'arbre moteur soit un engrenage droit, et que les engrenages terminant les premier et troisième arbres d'entraînement soient des engrenages coniques d'angles au sommet différents, de sorte que les angles d'inclinaison des premier et troisième axes de rotation des lames soient différents. De tels assemblages sont connus de l'homme du métier et ne seront pas décrits plus en détails.

En variante encore, on pourrait prévoir un engrenage intermédiaire placé entre l'engrenage terminant l'arbre moteur et l'engrenage terminant un des arbres d'entraînement. Ainsi, le sens de rotation de cet arbre d'entraînement serait le même que celui de l'arbre moteur. Avantageusement, la vitesse de cet arbre d'entraînement dépendrait alors des paramètres de l'engrenage intermédiaire, et notamment du rayon de cet engrenage intermédiaire.

On pourrait également prévoir plusieurs engrenages intermédiaires séparant l'engrenage terminant l'arbre d'entraînement et l'engrenage terminant l'arbre moteur, ce qui influencerait le sens de rotation et la vitesse de rotation de l'arbre d'entraînement en question.

Ainsi, on comprend bien que selon le premier mode d'entraînement en rotation des lames, il est possible d'entraîner en rotation tous les arbres d'entraînement dans le même sens de rotation, ou dans des sens de rotation opposés, et à la même vitesse de rotation, ou à des vitesses de rotation différentes.

Dans le cas où les vitesses de rotation des arbres d'entraînement sont différentes les unes des autres, ces vitesses de rotation restent directement proportionnelles à celle de l'arbre moteur, de sorte que le rapport entre les vitesses de rotation des premier, deuxième et troisième arbres d'entraînement est toujours constant.

Autrement dit, en modifiant la vitesse de rotation de l'arbre moteur, l'utilisateur peut modifier la vitesse de rotation des arbres d'entraînement, sans modifier le rapport entre les vitesses de rotation de ces arbres d'entraînement.

Selon le deuxième mode d'entraînement en rotation des lames, il est prévu que les arbres d'entraînement soient entraînés en rotation indépendamment les uns des autres.

Avantageusement, ce deuxième mode d'entraînement en rotation des lames offre une grande flexibilité de mise en œuvre dans la mesure où chaque lame peut être commandée individuellement.

Dans ce deuxième mode d'entraînement en rotation des lames, les arbres d'entraînement sont chacun associés à un moteur distinct. Autrement dit, dans ce cas, le socle du dispositif de préparation culinaire enferme au moins deux moteurs différents, voire autant de moteurs qu'il y a d'arbres d'entraînement.

Ainsi, les vitesses de rotation et les sens de rotation des arbres d'entraînement sont indépendants les uns des autres. En conséquence, il n'existe pas nécessairement de rapport de proportionnalité entre les vitesses des différentes lames.

Avantageusement, quel que le soit le mode d'entraînement en rotation des lames, si les lames 10, 11, 12, 13 présentent des sens de rotation opposés, le flux des aliments dans le contenant 2 est complexe, ce qui favorise la circulation desdits aliments dans le contenant 2 et assure un travail plus homogène de ces aliments.

La présente invention permet d'améliorer le brassage des aliments dans le contenant. Elle permet ainsi de diminuer nettement la quantité de rebuts engendrés lors d'un cycle de fonctionnement du dispositif. Elle permet aussi d'améliorer l'homogénéité des préparations culinaires obtenues, et ce en un seul cycle de fonctionnement qui est de surcroît plus court que les cycles de fonctionnement usuels des dispositifs de préparation culinaire du marché actuel.

L'invention n'est nullement limitée aux modes de réalisation et d'entraînement en rotation des lames décrits, et l'homme du métier saura combiner ces différents modes et y apporter toute variante tout en restant dans le cadres des revendications.

**Revendications**

1. Dispositif de préparation culinaire (1) comprenant :

   - un contenant (2) adapté à recevoir des aliments à préparer, ce contenant (2) présentant un fond (4) et une paroi latérale (3) qui s'élève à partir du fond (4) globalement selon un axe vertical (V), et
   - au moins deux lames (10, 11, 12, 13) disposées dans le contenant (2), chaque lame (10, 11, 12, 13) étant entraînée en rotation autour d'un axe de rotation (R1, R2 ; R3, R4), l'axe de rotation (R2) d'au moins une des lames (10 ; 11 ; 12 ; 13) s'étendant selon la direction dudit axe vertical (V),

   **caractérisé en ce que** l'axe de rotation (R1, R3, R4) d'au moins une des autres lames (10, 11, 12, 13) est incliné d'un angle d'inclinaison (I1, I3, I4) non nul par rapport audit axe vertical (V).

2. Dispositif selon la revendication 1, dans lequel la valeur de chaque angle d'inclinaison (I1, I3, I4) est comprise entre 5 et 90 degrés.

3. Dispositif selon l'une des revendications 1 et 2, dans lequel la valeur d'au moins un angle d'inclinaison (I1, I3, I4) est comprise entre 40 et 90 degrés.

4. Dispositif selon l'une des revendications 1 à 3, dans lequel il est prévu au moins un axe de rotation (R1) commun à au moins deux lames (10, 11, 12, 13).

5. Dispositif selon la revendication 4, dans lequel deux lames (10, 11, 12, 13) portées par l'axe de rotation (R1) commun sont séparées l'une de l'autre d'une distance comprise entre 5 millimètres et 50 millimètres le long dudit axe de rotation commun.

6. Dispositif selon l'une des revendications 1 à 5, dans lequel au moins une des lames (10, 11, 12, 13) est positionnée à proximité du fond (4) du contenant (2).

7. Dispositif selon l'une des revendications 1 à 6, dans lequel au moins deux lames (10, 11, 12, 13) présentent un sens de rotation opposé.

8. Dispositif selon l'une des revendications 1 à 7, dans lequel au moins une des lames (10, 11, 13) présente un bord de coupe affûté.

9. Dispositif selon l'une des revendications 1 à 8, dans lequel au moins une des lames est une pale de brassage (12).

10. Dispositif selon l'une des revendications 1 à 9 dans lequel les lames (10, 11, 12, 13) sont montées sur des arbres d'entraînement (51, 52, 53, 54) entraînés en rotation par un même arbre moteur (40) principal.

11. Dispositif selon l'une des revendications 1 à 9 dans lequel les lames sont montées sur des arbres d'entraînement entraînés en rotation indépendamment les uns des autres.

12. Dispositif selon l'une des revendications 1 à 11, dans lequel au moins deux lames (10, 11, 12, 13) sont entraînées en rotation à des vitesses de rotation différentes.

13. Dispositif selon l'une des revendications 1 à 12, dans lequel il est prévu une lame supplémentaire libre dans ledit contenant (2).

14. Dispositif selon la revendication 13, dans lequel il est prévu un mécanisme de blocage de ladite lame supplémentaire libre dans ledit contenant (2).

15. Dispositif selon l'une des revendications 1 à 14, dans lequel il est prévu un élément déflecteur fixe dans ledit contenant (2).

**Patentansprüche**

1. Lebensmittelzubereitungsvorrichtung (1) mit:

   - einem Behälter (2), der dazu ausgelegt ist, zuzubereitende Lebensmittel aufzunehmen, wobei der Behälter (2) einen Boden (4) und eine Seitenwand (3), die sich vom Boden (4) aus im Wesentlichen entlang einer senkrechten Achse (V) erhebt, aufweist, und
   - mindestens zwei im Behälter (2) angeordneten Klingen (10, 11, 12, 13), wobei jede Klinge (10, 11, 12, 13) um eine Drehachse (R1, R2; R3, R4) drehend angetrieben wird, wobei sich die Drehachse (R2) mindestens einer der Klingen (10; 11; 12; 13) in der Richtung der senkrechen Achse (V) erstreckt,

   **dadurch gekennzeichnet, daß** die Drehachse (R1, R3, R4) mindestens einer der anderen Klingen (10, 11, 12, 13) um einen von Null verschiedenen Neigungswinkel (I1, I3,I4) gegenüber der senkrechten Achse (V) geneigt ist.

2. Vorrichtung gemäß Anspruch 1, bei der der Wert jedes Neigungswinkels (I1, I3, I4) zwischen 5 und 90 Grad beträgt.

3. Vorrichtung gemäß einem der Ansprüche 1 und 2, bei der der Wert mindestens eines Neigungswinkels (I1, I3, I4) zwischen 40 und 90 Grad beträgt.

4. Vorrichtung gemäß einem der Ansprüche 1 bis 3, bei der mindestens eine Drehachse (R1) vorgesehen ist, die mindestens zwei Klingen (10, 11, 12, 13) gemeinsam ist.

5. Vorrichtung gemäß Anspruch 4, bei der zwei von der gemeinsamen Drehachse (R1) getragene Klingen (10, 11, 12, 13) um einen Abstand zwischen 5 Millimeter und 50 Millimeter entlang der gemeinsamen Drehachse voneinander getrennt sind.

6. Vorrichtung gemäß einem der Ansprüche 1 bis 5, bei der mindestens eine der Klingen (10, 11, 12, 13) in der Nähe des Bodens (4) des Behälters (2) angeordnet ist.

7. Vorrichtung gemäß einem der Ansprüche 1 bis 6, bei der mindestens zwei Klingen (10, 11, 12, 13) eine entgegengesetzte Drehrichtung aufweisen.

8. Vorrichtung gemäß einem der Ansprüche 1 bis 7, bei der mindestens eine der Klingen (10, 11, 13) eine geschliffene Schnittkante aufweist.

9. Vorrichtung gemäß einem der Ansprüche 1 bis 8, bei der mindestens eine der Klingen eine Umrührschaufel ist.

10. Vorrichtung gemäß einem der Ansprüche 1 bis 9, bei der die Klingen (10, 11, 12, 13) auf Antriebswellen (51, 52, 53, 54) montiert sind, die von ein und demselben Hauptwellenmotor (40) angetrieben werden.

11. Vorrichtung gemäß einem der Ansprüche 1 bis 9, bei der die Klingen auf Antriebswellen montiert sind, die unabhängig voneinander drehend angetrieben werden.

12. Vorrichtung gemäß einem der Ansprüche 1 bis 11, bei der mindestens zwei Klingen (10, 11, 12, 13) mit unterschiedlichen Drehgeschwindigkeiten drehend angetrieben werden.

13. Vorrichtung gemäß einem der Ansprüche 1 bis 12, bei der eine freie zusätzliche Klinge im Behälter (2) vorgesehen ist.

14. Vorrichtung gemäß Anspruch 13, bei der im Behälter (2) ein Mechanismus zum Blockieren der freien zusätzlichen Klinge vorgesehen ist.

15. Vorrichtung gemäß einem der Ansprüche 1 bis 14, bei der ein feststehendes Ablenkelement im Behälter (2) vorgesehen ist.

**Claims**

1. A food preparation device (1) comprising:

   a container (2) suitable for receiving food for preparation, the container (2) presenting a bottom (4) and a side wall (3) that rises from the bottom (4) generally along a vertical axis (V), at least two blades (10, 11, 12, 13) arranged in the container (2), each blade (10, 11, 12, 13) being driven in rotation about an axis of rotation (R1, R2; R3, R4), the axis of rotation (R2) of at least one of the blades (10; 11; 12; 13) extending in the direction of said vertical axis(V),

   **characterized in that** the axis of rotation (R1, R3, R4) of at least one of the other blades (10, 11, 12, 13) is inclined at a non-zero angle of inclination (I1, 13, 14) relative to said vertical axis (V).

2. The device according to claim 1, wherein the value of each angle of inclination (I1, 13, 14) lies in the range from 5 degrees to 90 degrees.

3. The device according to any one of claims 1 and 2, wherein the value of at least one angle of inclination (I1, 13, 14) lies in the range from 40 degrees to 90 degrees.

4. The device according to any one of claims 1 to 3, wherein at least one axis of rotation (R1) is provided that is common to at least two blades (10, 11, 12, 13).

5. The device according to claim 4, wherein two blades (10, 11, 12, 13) carried by the common axis of rotation (R1) are separated from each other by a distance lying in the range from 5 mm to 50 mm along said common axis of rotation.

6. The device according to any one of claims 1 to 5, wherein at least one of the blades (10, 11, 12, 13) is positioned in the proximity of the bottom (4) of the container (2).

7. The device according to any one of claims 1 to 6, wherein at least two blades (10, 11, 12, 13) present opposite directions of rotation.

8. The device according to any one of claims 1 to 7, wherein at least one of the blades (10, 11, 13) presents a sharp cutting edge.

9. The device according to any one of claims 1 to 8, wherein at least one of the blades is a stirring paddle (12).

10. The device according to any one of claims 1 to 9, wherein the blades (10, 11, 12, 13) are mounted on driveshafts (51, 52, 53, 54) that are driven in rotation by a common main motor driveshaft (40).

11. The device according to any one of claims 1 to 9, wherein the blades are mounted on driveshafts that are driven in rotation independently of one another.

12. The device according to any one of claims 1 to 11, wherein at least two blades (10, 11, 12, 13) are driven in rotation at different speeds of rotation.

13. The device according to any one of claims 1 to 12, wherein an additional blade is provided that is free in said container (2).

14. The device according to claim 13, wherein a blocking mechanism is provided for blocking said free additional blade in said container (2).

15. The device according to any one of claims 1 to 14, wherein a stationary deflector element is provided in said container (2).

## Fig.1

## Fig.2

**Fig.3**

**Fig.4**

# Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050018534 A